(19) Europäisches Patentamt
European Patent Office
Office européen des brevets

(11) **EP 2 259 210 A2**

(12) **EUROPÄISCHE PATENTANMELDUNG**

(43) Veröffentlichungstag:
08.12.2010 Patentblatt 2010/49

(51) Int Cl.:
*G06K 9/72* (2006.01)          *B07C 3/14* (2006.01)
*G06F 17/30* (2006.01)

(21) Anmeldenummer: 10154609.1

(22) Anmeldetag: 25.02.2010

(84) Benannte Vertragsstaaten:
AT BE BG CH CY CZ DE DK EE ES FI FR GB GR
HR HU IE IS IT LI LT LU LV MC MK MT NL NO PL
PT RO SE SI SK SM TR
Benannte Erstreckungsstaaten:
AL BA RS

(30) Priorität: 05.06.2009 DE 102009023959
10.06.2009 DE 102009025018

(71) Anmelder: SIEMENS AKTIENGESELLSCHAFT
80333 München (DE)

(72) Erfinder: Miletzki, Udo
78465, Konstanz (DE)

(54) **Verfahren und Vorrichtung zur Analyse einer Datenbank**

(57) Die Erfindung betrifft ein Verfahren zur Analyse mindestens einer eine Vielzahl von Referenzdaten (Da) umfassenden Datenbank (2), insbesondere zur Bestimmung der Qualität der Datenbank (2), bei dem bei einer Vielzahl von Gegenständen (12) mit jeweils einem Informationen tragenden Datenfeld aus dem Datenfeld Datenelemente (De) ermittelt und diese durch Vergleich mit den Referenzdaten (Da) geprüft und bestätigt werden sowie daraus resultierende Vergleichsergebnisse (V) erfasst werden.

Es wird vorgeschlagen, dass ein Lesbarkeitsgrad von zumindest einem Teil der Datenelemente (De) bestimmt und anhand des Lesbarkeitsgrads und der Vergleichsergebnisse (V) automatisch ein Zustand (Z) der Datenbank (2) ermittelt wird.

FIG 1

**Beschreibung**

Die Erfindung betrifft ein Verfahren und eine Vorrichtung zur Analyse mindestens einer eine Vielzahl von Referenz-Daten umfassenden Datenbank, insbesondere zur Bestimmung der Qualität der Datenbank.

Adresslesesysteme, die beispielsweise in Anlagen zur automatischen Sortierung von Sendungen eingesetzt werden, lesen automatisch Aufschriften, z. B. Adressen auf Dokumenten, insbesondere Sendungen. Je nach Aufbau eines solchen Adresslesesystems können daraus notwendige Verteilinformationen zur Sortierung abgeleitet werden.

Üblicherweise umfassen solche Adresslesesysteme Datenbanken, auch Adress-Datenbanken genannt, in welchen Referenzdaten hinterlegt sind. Im Allgemeinen kann es beim automatischen Lesen von Adressen auf Sendungen bedingt durch unvollständige Adressen, fehlerhafte Adressen und/oder schlecht lesbare Adressen zu einem Nicht-Identifizieren der Adresse eines Dokuments oder einer Sendung mittels des Adresslesesystems kommen. Darüber hinaus kann es aufgrund einer unvollständigen Datenbank, z.B. durch fehlende neue Adressen, veraltete Adressen, nicht aktualisierte Adressen oder Adressfehleingaben, ebenfalls zu einem Nicht-Identifizieren der Adresse eines Dokuments oder einer Sendung kommen.

Bisherige Analysen einer Adressdatenbank betreffen im Allgemeinen die gesamte Zurückweisungsrate, also den Anteil solcher auf den Briefen gelesenen Adressen, der nicht in der Datenbank aufgefunden wird. Je schlechter die Datenbank ist, desto höher ist die Zurückweisungsrate bzw. desto schlechter die Trefferrate.

Aus der DE 10 2004 030 415 A1 ist ein Verfahren zur automatischen Ermittlung operativer Leistungsdaten von Lesesystemen bekannt, bei welchem Videokodierergebnisse und Bewertungsergebnisse unter einer jeweiligen Sendungskennung abgespeichert und statistische Auswertungen zur Ermittlung von Zurückweisungs- oder Leseraten, bezogen auf das Gesamtsystem von Lesbarkeit der Sendungsaufschriften und Leseergebnisse eines OCR-Lesers und/oder Teilen davon und/oder auf operative Kodierkräfte und/oder zur Ermittlung der Häufigkeit von mehrdeutigen, nicht interpretierbaren oder unlesbaren Sendungsaufschriften, durchgeführt werden.

Aus der EP 1 196 886 B1 ist ein Verfahren zur Bildung und/oder Aktualisierung von Wörterbüchern zum automatischen Adresslesen bekannt, bei welchem Klassen von Wörtern oder zusammengehörenden Wortgruppen anhand von Leseergebnissen von Adressen gebildet werden.

Der Erfindung liegt die Aufgabe zugrunde, ein verbessertes Verfahren und eine verbesserte Vorrichtung zur Analyse einer Datenbank anzugeben, insbesondere zur Bestimmung einer Qualität der Datenbank.

Hinsichtlich des Verfahrens wird die Aufgabe erfindungsgemäß durch die in Anspruch 1 angegebenen Merkmale gelöst. Hinsichtlich der Vorrichtung wird die Aufgabe erfindungsgemäß durch die in Anspruch 13 angegebenen Merkmale gelöst.

Vorteilhafte Weiterbildungen der Erfindung sind Gegenstand der Unteransprüche.

So wird die Aufgabe erfindungsgemäß gelöst, indem aus Rohdaten Datenmerkmale ermittelt und durch Vergleich mit den Referenz-Daten geprüft und bestätigt werden sowie daraus resultierende Vergleichsergebnisse erfasst und gegebenenfalls zwischengespeichert werden, wobei anhand der Vergleichsergebnisse und/oder daraus abgeleiteter Parameter automatisch ein Zustand, insbesondere die Qualität, der Datenbank ermittelt wird.

Beim Verfahren zur Analyse mindestens einer eine Vielzahl von Referenzdaten umfassenden Datenbank werden bei einer Vielzahl von Gegenständen mit jeweils einem Informationen tragenden Datenfeld aus dem Datenfeld Datenelemente ermittelt und diese werden durch Vergleich mit den Referenzdaten geprüft und bestätigt und daraus resultierende Vergleichsergebnisse werden erfasst. Erfindungsgemäß wird ein Lesbarkeitsgrad von zumindest einem Teil der Datenelemente bestimmt und anhand des Lesbarkeitsgrads und der Vergleichsergebnisse automatisch ein Zustand der Datenbank ermittelt.

Ein solches neuartiges Verfahren zur Ermittlung der Qualität einer Datenbank ermöglicht es, beim Lesen und Extrahieren von Datenelementen und deren Datenmerkmalen mögliche Fehler in der Datenbank, also falsche oder fehlende Einträge, zu identifizieren und zu beheben, so dass ein verbesserter Erfassungsprozess durch Zuordnung von Datenelementen zu Referenzdaten ermöglicht ist.

Die Datenelemente werden mit den Referenzdaten verglichen. Die Zahl der Treffer und Fehlschläge werden bei einer repräsentativen Menge von Gegenständen für die Berechnung des Zustands bzw. der Qualität der Datenbank zugrunde gelegt. Um unerwünschte Effekte durch OCR-Fehler gering zu halten und insbesondere auszuschließen, wird für die Berechnung des Zustands eine Abschätzung des Lesbarkeitsgrads mit einbezogen. Zweckmäßigerweise werden für die Zustandsermittlung nur solche Datenfelder verwendet deren Datenelemente eindeutig und gut lesbar sind. Hierdurch kann eine zuverlässige Überwachung und Analyse der Qualität einer Datenbank sichergestellt werden, sodass erkannt werden kann, ob die Datenbank auch mit zunehmender Größe und zunehmendem Lebensalter weitgehend vollständig ist und mit korrekten Daten versehen ist. Es kann fortlaufend überwacht werden, ob eine Aktualisierung der Datenbank erforderlich ist.

Die zur Bestimmung des Lesbarkeitsgrads benötigten Daten können aus einem oder mehreren Zwischenresultaten der Erkennung eines automatischen Lesesystems abgeleitet werden, so dass kein besonderer apparativer Aufwand erforderlich ist.

Bevorzugt sind die Gegenstände Postsendungen oder Dokumente. Das Verfahren wird somit bevorzugt beim Lesen von Adressen und/oder Aufschriften auf Postsendungen und/oder Dokumenten angewendet, insbesondere beim Sortieren von Sendungen anhand der erfassten und gelesenen sowie zuordenbaren Adressen. Die Datenbank kann ein Adresswörterbuch bzw. eine Adressdatenbank sein, in der die Adressen einer Vielzahl von Sendungsempfängern abgelegt sind. Das Datenfeld auf den Gegenständen kann ein ROI (region of interest) oder ein Adressfeld sein, in dem eine Zustelladresse angegeben ist. Das Datenfeld kann eine Adresse umfassen, die als Datensatz bezeichnet werden kann.

Die Datenelemente können erste Datenelemente in Form von Rohdaten sein, die alphanumerische Zeichen sind, also Buchstaben und/oder Ziffern, inklusive Sonderzeichen. Es können die Zeichen eines ASCI- oder UNICODE-Zeichensatzes sein. Die Datenelemente können alternativ oder zusätzlich zweite Datenelemente in Form von Datenmerkmalen sein, die aus den Rohdaten gewonnen wurden. Datenmerkmale können Adresse oder Adressteile sein, wie eine Postleitzahl, ein Ort, eine Straße, eine Firma oder ein Name eines Sendungsempfängers.

Die Datenelemente werden aus dem Datenfeld zweckmäßigerweise mittels OCR (optical character recognition) ermittelt. Ebenfalls möglich ist Spracherkennung, wenn die Informationen auf dem Datenfeld in einer Spracherkennungseinrichtung gelesen werden. Bei dem Vergleich werden die Datenelemente, zweckmäßigerweise die Datenmerkmale, mit den Referenzdaten der Datenbank verglichen. Hierbei kann jedes Datenfeld einen Datensatz bilden und die Referenzdaten können in Referenzdatensätze gegliedert sein, sodass die Datensätze mit den Referenzdatensätzen verglichen werden können, bei einer Entsprechung oder Identität kann von einem Treffer gesprochen werden, die Datenelemente werden somit bestätigt. Kann kein Referenzdatensatz gefunden werden, der einem Datensatz entspricht, kann von einem Fehlschlag gesprochen werden. Der Vergleich kann in Teilvergleichen erfolgen, bei denen jeweils ein Teil des Datensatzes mit einem entsprechenden Teil der Referenzdatensätze verglichen wird.

Der Lesbarkeitsgrad kann ein Lesbarkeitsgrad von Rohdaten, also z.B. ASCII-Zeichen, von Datensatzteilen oder vom ganzen Datensatz sein. Er kann aus Werten des OCR gewonnen werden, z.B. aus der OCR-Güte von Rohdaten, Datensatzteilen oder dem ganzen Datensatz.

Zweckmäßigerweise wird der Lesbarkeitsgrad aus den Rohdaten ermittelt und die Datenmerkmale werden mit den Referenzdaten verglichen. Auf diese Weise können andere Informationsteile, z.B. Adressteile, zur Bestimmung des Lesbarkeitsgrads verwendet werden, als zum Vergleich herangezogen werden. Insbesondere kann aus den für den Vergleich notwendigen Datenelementen ein Teil herausgefiltert werden und nur der verbleibende Teil der Datenelemente zur Bestimmung der Lesbarkeit herangezogen werden.

In einer vorteilhaften Ausführungsform der Erfindung werden zur Bestimmung des Zustands der Datenbank nur Informationen aus solchen Datenfeldern, z.B. von solchen Gegenständen, berücksichtigt, deren Datenelemente einen Lesbarkeitsgrad über einer Mindestgüte aufweisen. Der Lesbarkeitsgrad kann Gesamtlesbarkeitsgrad der Datenelemente zusammen sein, z.B. des gesamten Datensatzes, beispielsweise der gesamten Adresse.

Weiter bevorzugt wird eine Anzahl von Datentreffern ermittelt, z.B. aus den Vergleichsergebnissen, bei denen die zugehörigen Datenelemente einen Lesbarkeitsgrad über einer Mindestgüte aufweisen und zu denen zugehörige Referenz-Daten aufgefunden werden. Jedes Datenfeld kann einen Datensatz bilden, die Anzahl der Datentreffer kann die Anzahl der Datensätze sein, zu denen ein Treffer in den Referenzdaten gefunden wird.

Darüber hinaus wird in einer Weiterbildung der Erfindung die Anzahl von Datentreffern ermittelt, bei welchen zu Rohdaten und/oder deren Datenmerkmalen zugehörige Referenzdaten aufgefunden werden. Mit anderen Worten: Es werden diejenigen Datentreffer für mehrere Dokumente oder Sendungen ermittelt, welche durch in der Datenbank hinterlegte Referenzdaten verifiziert werden können. Die Anzahl von Datentreffern entspricht so der Anzahl von gut lesbaren Datensätzen, die zu Referenzdaten zugeordnet werden können.

Zweckmäßigerweise wird anhand der ermittelten Anzahl von Datentreffern, als ein Zustandsparameter ein Vollständigkeitsgrad der Datenbank ermittelt. In einer bevorzugten weiteren Ausführungsform der Erfindung wird die Anzahl aller lesbaren, aber nicht zuordenbaren Datenelemente ermittelt. Das heißt, es werden jene Datenelemente ermittelt, bei welchen die lesbaren Datenelemente für einen Vergleich mit den gespeicherten Referenzdaten keine verwertbaren, nicht interpretierbaren oder mehrdeutige Datenelemente aufweisen. Auch kann es sich dabei um solche Datenelemente handeln, zu denen Referenzdaten in der Datenbank fehlen. Dabei werden als lesbare Datenelemente wiederum Roh-Daten mit einer Mindestgüte als Grundlage verwendet. Somit gibt auch jene Anzahl von gut lesbaren, aber nicht zuordenbaren Datenelementen ein Maß für die Qualität der Datenbank an.

Eine weitere oder alternative Ausführungsform der Erfindung sieht vor, dass die Anzahl aller nicht genutzten Referenzdaten ermittelt wird. Das heißt, es werden jene unbenutzten Referenzdaten ermittelt, denen beispielsweise auch über einen vorgebbaren Zeitraum keine ermittelten Datenelemente zugeordnet werden konnten. Bei solchen unbenutzten Referenzdaten kann es sich beispielsweise um fehlerhafte, z. B. fehlerhaft eingegebene, falsche und/oder veraltete Referenzdaten handeln. Somit gibt jene Anzahl von nicht genutzten Referenzdaten ein Maß für die Qualität der Datenbank, insbesondere für eine so genannte Verunreinigung dieser mit nicht benötigten Referenzdaten und gegebenenfalls den Zuordnungsprozess störenden ungültigen Referenzdaten an.

Zweckmäßigerweise wird als ein Zustandsparameter ein Reinheitsgrad derart ermittelt, dass zumindest die Summe aller genutzten oder nicht genutzten Referenzdaten bzw. Referenzdatensätze in Verhältnis zu der Summe aller Referenzdaten bzw. Referenzdatensätze gesetzt wird.

Für eine vollständige Analyse der Datenbank und eine vollständige Bestimmung der Qualität dieser wird der Zustand der Datenbank derart ermittelt, dass das Produkt aus dem ermittelten Vollständigkeitsgrad und dem ermittelten Reinheitsgrad bestimmt wird und mit einem vorgegebenen Grenzwert verglichen wird. Der Zustand der Datenbank kann dabei ursprünglich auf den Wert eins gesetzt werden, der die Datenbank als eine vollständige und keine Fehler aufweisende Datenbank bewertet.

Hinsichtlich der Vorrichtung zur Analyse der Datenbank umfasst diese ein automatisches Lesesystem oder OCR-System zur Erfassung von Datenelementen sowie eine Analyseeinheit, welche die Datenelemente durch Vergleich mit den gespeicherten Referenzdaten prüft und bestätigt sowie daraus resultierende Vergleichsergebnisse zwischenspeichert und anhand der zwischengespeicherten Vergleichsergebnisse und/oder daraus abgeleiteter Parameter automatisch einen Zustand der Datenbank ermittelt.

Bevorzugt ist das Lesesystem ein optisches Lesesystem, insbesondere ein so genannter OCR-Leser. Dabei werden mittels des OCR-Lesers in herkömmlicher Art und Weise die in einem Datenfeld einer Sendung oder eines Dokuments enthaltenen Roh-Daten gelesen und deren Abbild auf Datenmerkmale untersucht und diese extrahiert. Insbesondere werden dabei jene Datenelemente identifiziert und als lesbar bewertet, deren Zeichen eine Mindestgüte aufweisen, um aus Roh-Daten Datenmerkmale extrahieren zu können.

Ausführungsbeispiele der Erfindung werden anhand von Zeichnungen nachfolgend näher erläutert.

Dabei zeigen:

FIG 1    schematisch eine Vorrichtung zur Analyse einer Da- tenbank,

FIG 2    schematisch ein Ablaufdiagramm für ein Verfahren zur Analyse einer Datenbank und

FIG 3    eine Ansicht auf einen als Brief ausgeführten Ge- genstand.

Einander entsprechende Teile sind in allen Figuren mit den gleichen Bezugszeichen versehen.

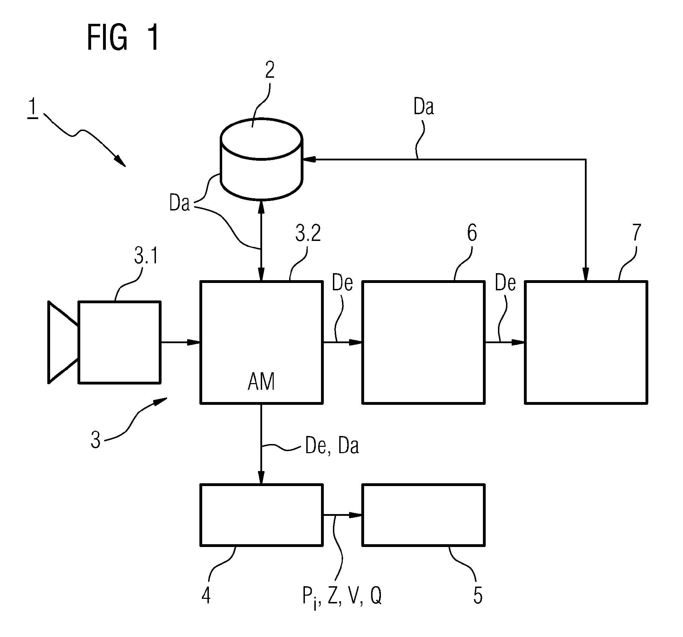

FIG 1 zeigt eine Vorrichtung 1 zur Analyse einer Datenbank 2. Bei der Datenbank 2 kann es sich beispielsweise um eine Adress-Datenbank einer Sortier- und Verteilanlage von Sendungen, z.B. Briefen, handeln. Dazu sind in der Datenbank 2 als Referenz-Daten Da Referenz-Adressdaten mit zugehörigen Datenmerkmalen, wie z. B. Postleitzahl, Ort, Straße, Adressaten, hinterlegt.

Die Vorrichtung 1 umfasst zur Analyse der Datenbank 2 ein Lesesystem 3, insbesondere ein optisches Lesesystem, welches eine Bilderfassungseinheit 3.1, z.B. eine Kamera, zur Erfassung eines Graubilds eines Gegenstands, z.B. einer Postsendung, wie einem Brief oder einem Paket. Dieses Graubild wird an eine Leseeinheit 3.2, insbesondere einen OCR-Leser, geleitet zum Extrahieren von Datenelementen De, z.B. Datenmerkmalen AM aus Rohdaten.

Die Vorrichtung 1 umfasst des Weiteren eine Analyseeinheit 4, welche die Datenelemente De durch Vergleich mit den gespeicherten Referenz-Adressdaten Da prüft und bestätigt oder einen Fehlschlag ausgibt. Resultierende Vergleichsergebnisse V können die Identität von Datenelementen mit Referenzdaten bzw. Datensätzen mit Referenzdatensätzen umfassen. Die Vergleichsergebnisse V können in einer nicht näher dargestellten Datenspeichereinheit zwischengespeichert werden. Anhand der Vergleichsergebnisse V und/oder daraus abgeleiteter Parameter $P_i$ wird dann mittels der Analyseeinheit 4 automatisch ein Zustand Z der Datenbank 2 ermittelt.

Hierzu können der Analyseeinheit 4 zum Testen und Ermitteln von Ausgangswerten der Parameter $P_i$ und des Zustands Z der Datenbank 2 beispielsweise eine Vielzahl von Datenelementen De, z.B. von mindestens 100 Sendungen, zugeführt werden. Die Vergleichsergebnisse V und/oder die Parameter $P_i$ und/oder der ermittelte Zustand Z können darüber hinaus über eine Ausgabeeinheit 5, z.B. einen Bildschirm oder einen Drukker, alphanumerisch und/oder graphisch ausgegeben werden.

Darüber hinaus kann die Vorrichtung 1 eine Bildverarbeitungseinheit 6 umfassen, welche alle von der Bilderfassungseinheit 3.1 erfassten Bilder für weitere Bildverarbeitungsprozesse speichert und verwaltet. Dabei kann die Bildverarbeitungseinheit 6, wie dargestellt, mit der Leseeinheit 3.2 verbunden sein. Alternativ oder zusätzlich kann die Bildverarbeitungseinheit 6 direkt mit der Bilderfassungseinheit 3.1 verbunden sein.

Die Bildverarbeitungseinheit 6 kann optional mit einer Datenaktualisierungseinheit 7 (auch Lerndateneinheit genannt) verbunden sein. Mittels der Datenaktualisierungseinheit 7 werden aus Datenfeldern von Sendungen solche Datenelemente De identifiziert, die noch nicht in der Datenbank 2 enthalten sind, sowie solche Referenzdaten, die nicht für einen Vergleich verwendet wurden. Nach Ablauf einer vorgebbaren Zeit und/oder nach Überschreiten einer vorgebbaren Mindestanzahl von zu aktualisierenden und/oder zu ergänzenden Referenz-Adressdaten Da in der Datenbank 2 wird mittels der Datenaktualisierungseinheit 7 automatisch eine Aktualisierung der Datenbank 2 ausgeführt, wobei die ermittelten neuen Datenelemente De als neue Referenzdaten Da in die Datenbank 2 eingefügt und/oder nicht verwendete Referenz-Adressdaten Da, beispielsweise durch Ablegen in eine besondere Datenbankregion, zukünftigen Vergleichen entzogen werden.

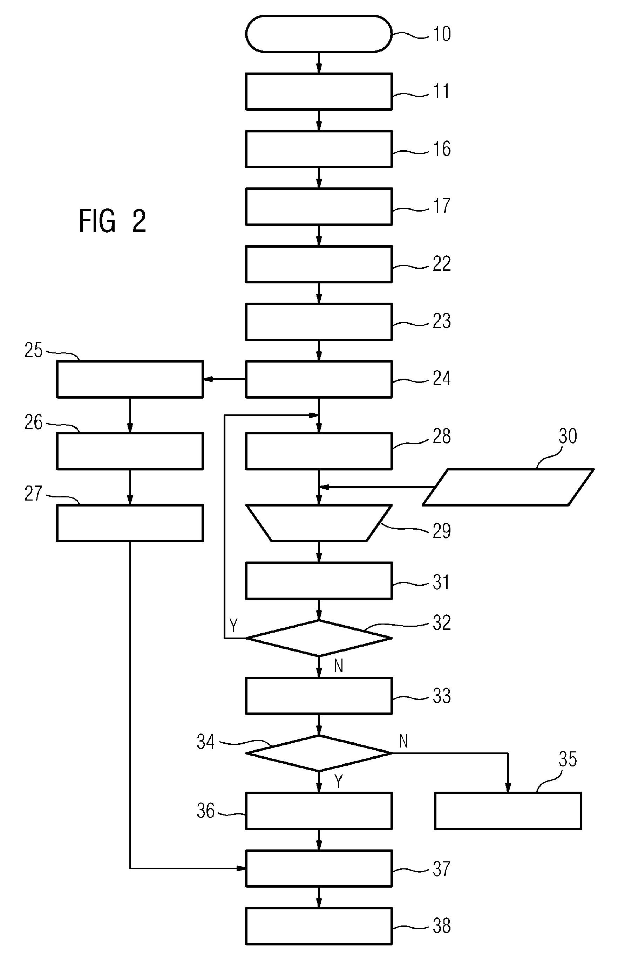

Nachfolgend wird das Verfahren zur Analyse und Ermittlung des Zustands Z der Datenbank 2 anhand des Ablaufdiagramms in FIG 2 beispielhaft näher erläutert. Das Verfahren zur Bestimmung des Zustands Z, insbesondere einer Qualität Q, der Datenbank 2 kann als ein Computerprogramm in der Analyseeinheit 4 implementiert sein.

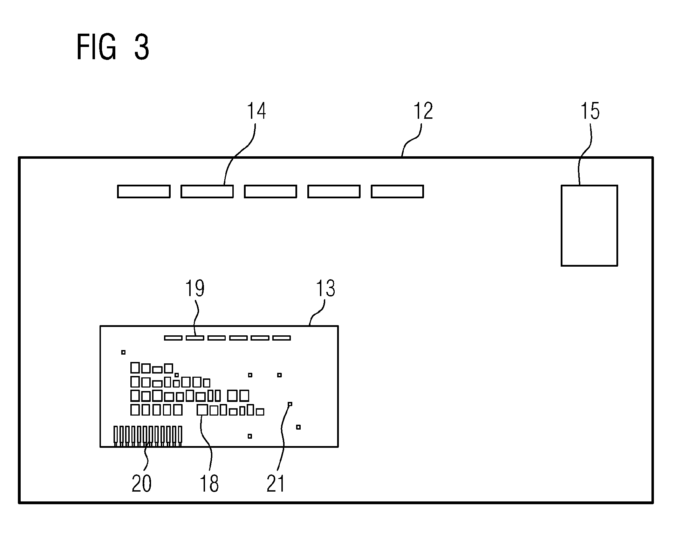

Zum Start 10 des Verfahrens werden Zähler und Statusanzeiger durch nullen initialisiert. In Schritt 11 wird ein Bild eines Gegenstands von der Kamera 3.1 aufgenommen und als Graubild der Leseeinheit 3.2 und der Bildverarbeitungseinheit 6 zugeführt. Ein Gegenstand 12 ist beispielhaft in FIG 3 dargestellt. Er umfasst ein Adressfeld 13, auch ROI (region of interest) genannt, das einen Datensatz mit einer Zustelladresse aufweist, weitere Textfelder 14, in denen Werbung aufgedruckt ist und ein Postwertzeichen 15. In Schritt 16 wird das ROI mittels Bilderkennung bestimmt. Anschließend werden im ROI die so genannten BB (bounding boxes) bestimmt, in denen sich ein Aufdruck befindet, der von der Leseeinheit 3.2 als mutmaßliches Datenelement De erkannt wird.

Aus FIG 3 ist zu erkennen, dass nicht alle BB tatsächlich Adresselemente enthalten. Neben denjenigen Bounding Boxes 18, die Adresselemente enthalten, sind solche Bounding Boxes 19 vorhanden, die weitere Elemente, z.B. klein gedruckte Werbung oder nur Striche, enthalten, weiter Bounding Boxes 20, die Striche eines Strichkodes enthalten und schließlich Bounding Boxes 21, die Flecken oder Bilderkennungsfehler beinhalten. Um die nicht interessierenden Bounding Boxes 19, 20, 21 auszusortieren, werden in Schritt 22 die Bounding Boxes 18 - 21 gefiltert. Es werden hierbei alle Bounding Boxes 19 - 21 aussortiert, deren Fläche kleiner als z.B. 1 mm$^2$, wodurch die Bounding Boxes 21 eliminiert werden, und/oder deren Verhältnis von Höhe zu Breite 0,25 unterschreitet oder 4 überschreitet, wodurch die Bounding Boxes 19 und 20 eliminiert werden.

Nun werden in Schritt 23 die Rohdaten aus den Bounding Boxes 18 mittels OCR gelesen. Hierbei wird einer oder mehreren Bounding Boxes 18 normalerweise mehrere Zeichen mit unterschiedlichen OCR-Güten zugeordnet, so dass eine Vielzahl von Pfaden gebildet werden können, wobei jeder Pfad eine mögliche Zeichenkette darstellt. Jeder Pfad umfasst mehrere Zeichen bzw. Rohdaten, die jeweils mit einer OCR-Güte versehen sind. Nun kann der beste Pfad für z.B. eine Adresszeile oder den die gesamte Adresse tragenden Datensatz in Schritt 24 aus den OCR-Güten ermittelt werden, z.B. derjenige, der den höchsten Mittelwert der OCR-Güten aller Zeichen aufweist.

In Schritt 25 können aus den Rohdaten die Datenmerkmale extrahiert werden, z.B. Postleitzahl, Ort, Straße mit Hausnummer oder Sendungsempfänger. Diese werden in Schritt 26 mit den Referenzdaten Da verglichen. Ein Treffer oder ein Fehlschlag kann ein Vergleichsergebnis sein. So wird beispielsweise bei einer Anzahl von Gegenständen, z.B. 10.000 Gegenständen, eine Summe aus Treffern und Fehlschlägen ermittelt, die der gegebenen Anzahl gleicht. In Schritt 27 werden die Vergleichsergebnisse, z.B. die Treffer und Fehlschläge, zu den jeweiligen Datensätzen zugeordnet abgespeichert. Anhand der Treffer können die Gegenstände z.B. nach Zielort sortiert werden.

Zur Ermittlung eines Lesbarkeitsgrads der Zeichen der Datensätze wird in einem Schritt 28 ein Zeichen auf seinen Lesbarkeitsgrad überprüft. Dieser Lesbarkeitsgrad kann eine OCR-Güte sein, die der OCR-Prozess für dieses Zeichen ausgegeben hat und zwar die OCR-Güte des besten Pfades. Es kann ermittelt werden, ob der Lesbarkeitsgrad über einem ersten Schwellwert liegt. In Schritt 29 wird das Zeichen einer Filterung unterworfen. Hierzu ist ein Filterdatensatz 30 mit herauszufilternden Zeichen vorhanden. Solche Zeichen sind alle punktähnlichen und strichähnlichen Zeichen, wie {!|||/ \l11'""'.,:;-_...}. Ist z.B. der Zielort der Postsendung 89257 Illertissen, so wird zwar die Zeichenkette "89257 Illertissen" für den Vergleich herangezogen, für die Bestimmung des Lesbarkeitsgrades jedoch nur die Zeichenkette "89257 ert ssen".

Durch diesen Filterschritt soll sichergestellt werden, dass mit sehr hoher Wahrscheinlichkeit keine nicht zur Adresse gehörenden Strichzeichen oder Punktzeichen zur Zustandsbestimmung der Datenbank herangezogen werden. Liegen z.B. einige Verschmutzungspunkte im Adressfeld, so werden diese z.B. als Interpunktionspunkte interpretiert. Schlimmstenfalls kann nun der Adresse keine Datenbankadresse zugeordnet werden, so dass ein Fehlschlag vorliegt. Ist jedoch die OCR-Güte der Punkte sehr hoch, so kann der fehlerhafte Rückschluss erfolgen, dass die durch die Punkte an sich unsinnige Adresse gut lesbar ist und sie wird zur Datenbankergänzung herangezogen. Dies soll unbedingt vermieden werden.

Im folgenden Schritt wird der Lesbarkeitsgrad der Zeichengesamtheit ermittelt. Beim ersten Zeichen ist dies der Lesbarkeitsgrad des ersten Zeichens. Da in Schritt 32 geprüft wird, ob im Datensatz oder einem Datensatzteil, wie einer Adresszeile, noch weitere Zeichen sind, und falls ja, die Schritte 28 - 31 wiederholt werden, ändert sich der Lesbarkeitsgrad der Zeichengesamtheit mit jedem Zeichen. So kann der Lesbarkeitsgrad als durchschnittlicher Lesbarkeitsgrad oder durchschnittliche OCR-Güte aller in der Schleife erfassten Zeichen bestimmt werden. Auch andere Berechnungen sind möglich.

Sind alle Zeichen erfasst, werden in Schritt 33 drei Parameter geprüft. Als Parameter a wird geprüft, ob der Lesbarkeitsgrad aller Zeichen über dem ersten Schwellwert liegt, z.B. über 0,8. Als Parameter b wird geprüft, ob der Lesbarkeitsgrad der Zeichengesamtheit oder Gesamtslesbarkeitsgrad über einem zweiten Schwellwert liegt, z.B. über 0,95. Und als Parameter c wird geprüft, ob der Lesbarkeitsgrad aller Zeichen innerhalb eines dritten Schwellwerts liegt, z.B. innerhalb von 0,15. Diese drei Parameter können zur Festlegung einer Mindestgüte des Lesbarkeitsgrades herangezogen werden, z.B. indem ein, zwei oder alle Parameter über bzw. innerhalb der Schwellwerte liegen müssen. Die Prüfung, ob die Mindestgüte vorliegt, wird in Schritt 34 vorgenommen. Liegt die Lesbarkeit des Datensatzes oder eines Teils davon auf oder unter dem Schwellwert, wird der Datensatz in Schritt 35 verworfen und nicht zur Zustandsbestimmung der Datenbank 2 herangezogen. Liegt die Lesbarkeit über dem Schwellwert, wird der Datensatz in Schritt 36 zur Zustandsbestimmung der Datenbank 2 herangezogen.

Hierzu werden in Schritt 37 zwei Zustandsparameter bzw. Qualitätsparameter $P_i$ der Datenbank überprüft, konkret: die Vollständigkeit $P_1$ und die Reinheit $P_2$. Dies kann bei jedem Datensatz erfolgen, so dass sich die beiden Parameter $P_i$ mit jedem Datensatz verändern. Es ist auch möglich, die Bestimmung der Parameter $P_i$ erst nach Kumulation der vorbestimmten Anzahl der Gegenstände erfolgt. Die Parameter $P_i$ können wie folgt berechnet werden:

$$ P_1 = \frac{N_{lesbar}^{Treffer}}{N_{lesbar}}, $$

$$ P_2 = 1 - \frac{N_{Da}^{unverwendet}}{N_{Da}}, $$

Mit $P_1 = \{0 \ ... \ 1\}$ und $P_2 = \{0 \ ... \ 1\}$ und

| | |
|---|---|
| $N_{lesbar}$: | Alle Datensätze mit einem Lesbarkeitsgrad über der Mindestgüte |
| $N_{lesbar}^{Treffer}$: | Alle Datensätze mit einem Lesbarkeitsgrad über der Mindestgüte, die zu einem Treffer führ- ten |
| $N_{Da}$: | Alle Referenzdatensätze der Datenbank |
| $N_{Da}^{unverwendet}$: | Alle Referenzdatensätze der Datenbank, die nicht für zu einem Treffer geführt haben. |

Ob ein Treffer zu einem Datensatz oder einem Teil daraus vorliegt, wurde in Schritt 26 ermittelt. Hiermit liegt auch die Kenntnis vor, welche Datensätze bzw. Referenzdaten Da der Datenbank 2 bereits zu einem Treffer geführt haben und welche noch nicht. Ob ein Treffer vorliegt, kann z.B. über einen Karenzzeitraum von 3 Monaten oder über eine bestimmte Anzahl von überprüften Datensätzen ermittelt werden.

In Schritt 38 wird der Zustand Z der Datenbank bestimmt nach der Formel

$$ Z = P_1 * P_2. $$

Dieser Zustand Z, der ein Produkt aus Vollständigkeit und Reinheit ist, gibt eine Qualität Q der Datenbank an.

Für eine Ursprungsdatenbank wird die Vollständigkeit $P_1$ und die Reinheit $P_2$ auf eins gesetzt, da die Summe aller ungenutzten oder nicht genutzten Referenz-Adressdaten Da gleich null ist und keine fehlerhaften Referenz-Adressdaten Da enthalten sind. Mit zunehmenden Fehlern in der Datenbank 2 nehmen Vollständigkeit $P_1$ und die Reinheit $P_2$ ab. Analog dazu ist die ursprüngliche Datenbank 2 eine vollständige und nicht verunreinigte und somit nicht fehlerbehaftete Datenbank. Die Qualität Q beträgt eins. Das heißt, alle gut lesbaren Roh-Adressdaten De und/oder Adressmerkmale AM können Referenz-Adressdaten Da zugeordnet werden.

Mit dem vorliegenden Verfahren ist ein einfaches, automatisches Verfahren zur Ermittlung einer Qualität einer Datenbank 2 unabhängig von der Anwendung der Datenbank ermöglicht.

Bezugszeichenliste

| | |
|---|---|
| 1 | Vorrichtung |
| 2 | Datenbank |
| 3 | Lesesystem |
| 3.1 | Bilderfassungseinheit |
| 3.2 | Leseeinheit |
| 4 | Analyseeinheit |
| 5 | Ausgabeeinheit |
| 6 | Bildverarbeitungseinheit |
| 7 | Datenaktualisierungseinheit |
| 10 | Initialisierung |
| 11 | Bildaufnahme |
| 12 | Gegenstand |
| 13 | Adressfeld |
| 14 | Textfeld |
| 15 | Postwertzeichen |
| 16 | ROI-Bestimmung |
| 17 | BB-Bestimmung |
| 18 | Bounding Box |
| 19 | Bounding Box |
| 20 | Bounding Box |
| 21 | Bounding Box |
| 22 | BB-Sortierung |
| 23 | Rohdatenermittlung |
| 24 | OCR-Güten-Ermittlung |
| 25 | Extraktion Datenmerkmale |
| 26 | Vergleich |
| 27 | Speichern |
| 28 | Lesbarkeitsgrad Zeichen |
| 29 | Filterung |

| | |
|---|---|
| 30 | Filterdatensatz |
| 31 | Ermittlung Lesbarkeitsgrad Datensatz |
| 32 | Prüfung Datensatzende |
| 33 | Prüfung auf Schwellwerte |
| 34 | Prüfung auf Mindestgüte |
| 35 | Verwerfen |
| 36 | Bestätigen |
| 37 | Bestimmung Qualitätsparameter |
| 38 | Bestimmung Zustand |
| AM | Adressmerkmale |
| Da | Referenz-Adressdaten |
| De | Datenelemente |
| $P_i$ | Parameter |
| $P_1$ | Vollständigkeit |
| $P_2$ | Reinheit |
| Q | Qualität |
| V | Vergleichsergebnis |
| Z | Zustand |

**Patentansprüche**

1. Verfahren zur Analyse mindestens einer eine Vielzahl von Referenzdaten (Da) umfassenden Datenbank (2), insbesondere zur Bestimmung der Qualität der Datenbank (2), bei dem bei einer Vielzahl von Gegenständen (12) mit jeweils einem Informationen tragenden Datenfeld aus dem Datenfeld Datenelemente (De) ermittelt und diese durch Vergleich mit den Referenzdaten (Da) geprüft und bestätigt werden sowie daraus resultierende Vergleichsergebnisse (V) erfasst werden, **dadurch gekennzeichnet, dass** ein Lesbarkeitsgrad von zumindest einem Teil der Datenelemente (De) bestimmt und anhand des Lesbarkeitsgrads und der Vergleichsergebnisse (V) automatisch ein Zustand (Z) der Datenbank (2) ermittelt wird.

2. Verfahren nach Anspruch 1, **dadurch gekennzeichnet, dass** die Datenelemente (De) erste Datenelemente (De) in Form von Rohdaten und zweite Datenelemente (De) in Form von aus den Rohdaten gewonnenen Datenmerkmalen (AM) umfassen, wobei der Lesbarkeitsgrad aus den Rohdaten ermittelt wird und die Datenmerkmale (De) mit den Referenzdaten (Da) verglichen werden.

3. Verfahren nach Anspruch 1 oder 2, **dadurch gekennzeichnet, dass** aus den für den Vergleich notwendigen Datenelementen (De) ein Teil herausgefiltert wird und nur der verbleibende Teil der Datenelemente (De) zur Bestimmung der Lesbarkeit herangezogen wird.

4. Verfahren nach einem der vorhergehenden Ansprüche, **dadurch gekennzeichnet, dass** die OCR-Güte eines jeden Datenelements (De) des Datenfelds erfasst wird und der Lesbarkeitsgrad als Funktion der so erfassten OCR-Güten bestimmt wird.

5. Verfahren nach Anspruch 4, **dadurch gekennzeichnet, dass** der Lesbarkeitsgrad aus dem Mittelwert der so erfassten OCR-Güten bestimmt wird.

6. Verfahren nach einem der vorhergehenden Ansprüche, **dadurch gekennzeichnet, dass** zur Bestimmung des Zustands der Datenbank (2) nur Informationen aus solchen Datenfeldern berücksichtigt werden, deren Datenelemente (De) einen Lesbarkeitsgrad über einer Mindestgüte aufweisen.

7. Verfahren nach Anspruch 6, **dadurch gekennzeichnet, dass** der Lesbarkeitsgrad eines jeden Datenelements (De) eines Datenfelds eines Gegenstands (12) erfasst wird und die Mindestgüte nur erreicht wird, wenn der Mittelwert aller Lesbarkeitsgrade über einem Schwellwert liegt.

8. Verfahren nach Anspruch 6 oder 7, **dadurch gekennzeichnet, dass** der Lesbarkeitsgrad eines jeden Datenelements (De) eines Datenfelds eines Gegenstands (12) erfasst wird und die Mindestgüte nur erreicht wird, wenn jeder so ermittelte Lesbarkeitsgrad über einem Schwellwert liegt.

9. Verfahren nach einem der Ansprüche 6 bis 8, **dadurch gekennzeichnet, dass** der Lesbarkeitsgrad eines jeden Datenelements (De) eines Datenfelds eines Gegenstands (12) erfasst wird und die Mindestgüte nur erreicht wird, wenn eine Schwankung der so ermittelten Lesbarkeitsgrade unter einem Schwellwert liegt.

10. Verfahren nach einem der vorhergehenden Ansprüche, **dadurch gekennzeichnet, dass** eine Anzahl von Datentreffern ermittelt wird, bei denen die zugehörigen Datenelemente (De) einen Lesbarkeitsgrad über einer Mindestgüte aufweisen und zu denen zugehörige Referenzdaten (Da) aufgefunden werden.

11. Verfahren nach Anspruch 10, **dadurch gekennzeichnet, dass** anhand der ermittelten Anzahl von Datentreffern und der Anzahl aller Datenelemente (De) mit einem Lesbarkeitsgrad über einer Mindestgüte als ein Zustandsparameter ($P_i$) ein Vollständigkeitsgrad ($P_1$) der Datenbank (2) ermittelt wird.

12. Verfahren nach einem der vorhergehenden Ansprüche, **dadurch gekennzeichnet, dass** ein Reinheitsgrad ($P_2$) der Datenbank (2) als Zustandsparameter ($P_i$)

aus der Summe aller genutzten oder aller nicht genutzten Referenzdaten in Verhältnis zu der Summe aller Referenzdaten ermittelt wird.

13. Verfahren nach Anspruch 11 und 12, **dadurch gekennzeichnet, dass** der Zustand aus dem Produkt aus Vollständigkeitsgrad ($P_1$) und Reinheitsgrad ($P_2$) ermittelt wird.

14. Vorrichtung (1) umfassend ein automatisches Lesesystem (3) zur Erfassung von Datenelementen (De) sowie eine Analyseeinheit (4) zur Durchführung des Verfahrens nach einem der Ansprüche 1 bis 13.

15. Vorrichtung nach Anspruch 14, wobei das Lesesystem (3) mindestens einen OCR-Leser (3.2) umfasst.

FIG 1

FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004030415 A1
- EP 1196886 B1